(19) Europäisches Patentamt
European Patent Office
Office européen des brevets

(11) **EP 2 919 297 A1**

(12) **EUROPEAN PATENT APPLICATION**

(43) Date of publication:
**16.09.2015 Bulletin 2015/38**

(51) Int Cl.:
*H01M 2/40* (2006.01)          *F42B 12/00* (2006.01)
*F42B 19/24* (2006.01)          *H01M 6/34* (2006.01)
*B63H 21/17* (2006.01)

(21) Application number: **15158716.9**

(22) Date of filing: **11.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **11.03.2014 IT TO20140191**

(71) Applicant: **Whitehead Sistemi Subacquei S.p.A. 00195 Roma (IT)**

(72) Inventors:
• **Mazzeschi, Elena**
  **53020 San Giovanni d'Asso (IT)**
• **Peselli, Mauro**
  **54033 Carrara (IT)**

(74) Representative: **Bongiovanni, Simone et al Studio Torta S.p.A.
Via Viotti, 9
10121 Torino (IT)**

(54) **Electrochemical battery for the propulsion of underwater craft with a centrifugal pump regulating incoming water flow**

(57)    An electrochemical battery for the propulsion of an underwater craft, comprising: a main electric battery (3) of the electrochemical type, wherein a mixing chamber (5) is configured to house an anhydrous electrolyte (7) and is provided with an intake member (8) for admitting a flow of water from the aquatic environment to the chamber (5), where the admitted water is mixed with the anhydrous electrolyte (7), thereby forming a liquid electrolyte, and a recirculation system (10) for the fluid electrolyte using a centrifugal electric pump (12) and communicating with a plurality of electrochemical cells (15) housed within the chamber (5). The water intake member is configured to establish a direct connection, when open, between the exterior of the craft and the inlet of the centrifugal pump (12), which has an outlet communicating with the mixing chamber. The centrifugal pump is dimensionally configured to act as a flow limiting device when the pressure at the pump inlet is higher than the pressure at the pump outlet, thereby supplying the mixing chamber with a substantially constant flow.

FIG. 1

EP 2 919 297 A1

**Description**

The present invention relates to an electrochemical battery, for the propulsion of underwater craft, with a centrifugal pump regulating the incoming water flow.

There are known electric batteries for the propulsion of craft (such as torpedoes for example) operating in an underwater environment that comprise:

- a main electric battery of the electrochemical type, in which a mixing chamber houses an anhydrous electrolyte (for example, sodium hydroxide) and which is provided with means for the controlled admission of a flow of water from the marine environment, to form a liquid electrolyte upon operation a water admission control, and means for discharging effluent into the aquatic environment, typically gases produced by the chemical reaction of the main battery; the mixing chamber houses a recirculation system for the fluid electrolyte in which an electric pump is designed to feed the electrolyte to a plurality of electrochemical cells (of the aluminium-silver oxide type for example) housed within the chamber;

- a start-up auxiliary electric battery that can be activated by remote control for opening the means of controlled admission and supplying power to the electric pump in order to achieve the formation and recirculation of the electrolyte.

Batteries of the above-described type use means of controlled water admission capable of regulating the flow of water fed to the chamber as a function the external pressure acting on the craft and therefore as a function of the depth reached by the craft.

In fact, torpedoes are normally launched from submarines and this can happen at any navigation depth of the submarine.

The operating depths of conventional submarines are approximately between 200 and 300 metres, while nuclear submarines can reach and go below 500 metres.

In consequence, the external water pressure can have values ranging from 1 bar to several tens of bars, while the pressure inside the chamber is initially similar to atmospheric pressure.

Without a flow-rate regulator device, the filling speed of the chamber would be highly variable, depending to the launch depth: low for launches near the surface of the sea and high at the deepest launch depths. For correct operation of the system, it is necessary that the filling speed and, in consequence, the inlet flow rate be confined between two well-defined values.

A water flow rate that is too low (for example, following a torpedo launch close to the sea surface), would slow the formation of the electrolyte and delay the availability of power from the main battery. If this delay was excessive, the start-up battery might drain before main one is ready; in this case the torpedo would cut out, be uncontrollable and not complete the mission.

A water flow rate that is very high (for example, following a launch at considerable depth) might damage the various components in the mixing chamber (electrochemical cells, gas separator, valves, etc.), with their consequent breakage. In this case as well, the torpedo's mission would not be completed.

Known type of flow-rate regulator devices carry out a check by measuring the pressure outside the craft in order to adjust the position of a moveable member that chokes the flow fed from outside the torpedo to the mixing chamber.

These flow-rate regulator devices, which envisage an electromechanical structure and an electronic control unit, are quite complex, both from the physical viewpoint and with regard to the control electronics.

In addition, flow-rate regulators are mechanically complex because they must adapt to the various launch conditions of the torpedo and must be able to support large dynamic forces during the transitory phase of water intake into the mixing chamber.

Finally, known types of flow-rate regulators also require auxiliary systems to prepare the regulator for the particular launch conditions.

Essentially, known types of flow-rate regulators are complicated, expensive and heavy, and intrinsically have a high probability of malfunction, severely reducing the reliability of the entire system to which they are applied. Failure of the regulator generally results in significantly impaired operation of the electrochemical battery, thereby making the torpedo's mission impossible.

The object of the present invention is to provide an electrochemical battery of the aforementioned type that enables achieving the controlled intake of water into the mixing chamber by means of a device already present in the electrochemical battery and intrinsically robust and efficient.

The foregoing object is achieved by the present invention in so far as it relates to an electrochemical battery for the propulsion of an underwater craft, in particular a torpedo, comprising: a main electric battery of the electrochemical type, in which a mixing chamber is configured to house an anhydrous electrolyte and is provided with an intake member for admitting a flow of water from the aquatic environment to the chamber, where the admitted water is mixed with the anhydrous electrolyte, thereby forming a liquid electrolyte; a recirculation system for the fluid electrolyte using a centrifugal electric pump and communicating with a plurality of electrochemical cells housed within the chamber (5); and an auxiliary electric battery that can be activated by remote control for powering the centrifugal electric pump, characterized in that the water intake member is configured to establish a direct connection, when open, between the exterior of the craft and the inlet of the centrifugal pump, which has an outlet communicating with the mixing chamber; said centrifugal pump is dimensionally configured to act as a flow limiting device when the pressure at the pump inlet is higher than the pressure at the pump outlet, thereby supplying the mixing chamber with a substantially constant flow that complies with the design limits of the electrochemical battery.

Advantageously, the electric pump is of the axial suction and radial delivery type, and comprises a casing that internally delimits a toroidal volute, which houses an impeller that is angularly movable about an axis under the propelling force of an electric motor; a discharge conduit runs from the volute, thereby forming the pump delivery line; at the connection zone with the volute, the exhaust conduit section has an area $AREA_{THROAT}$ that is sized according to the following expression:

$$AREA_{THROAT} = (Q_{MAX}/Q_R - q)/m$$

where:

m is a first parameter that is a function of the pressure difference $\Delta P$ between the pump inlet and the pump outlet under the severest operating conditions;
q is a second parameter that is a function of the pressure difference $\Delta P$ between the pump inlet and the pump outlet under said severest operating conditions;
$Q_{MAX}$ is the maximum allowable incoming flow rate for the aforesaid operating conditions;
$Q_R$ is the flow rate under nominal conditions.

The invention will now be described with particular reference to the accompanying drawings, which represent a preferred embodiment, in which:

Figure 1 shows a simplified transversal view of an electrochemical battery for the propulsion of craft in an aquatic environment implemented according to the principles of the present invention;
Figure 2 shows a detail of the electric battery in Figure 1;
Figures 3 and 4 show the physical behaviour of the detail shown in Figure 2.

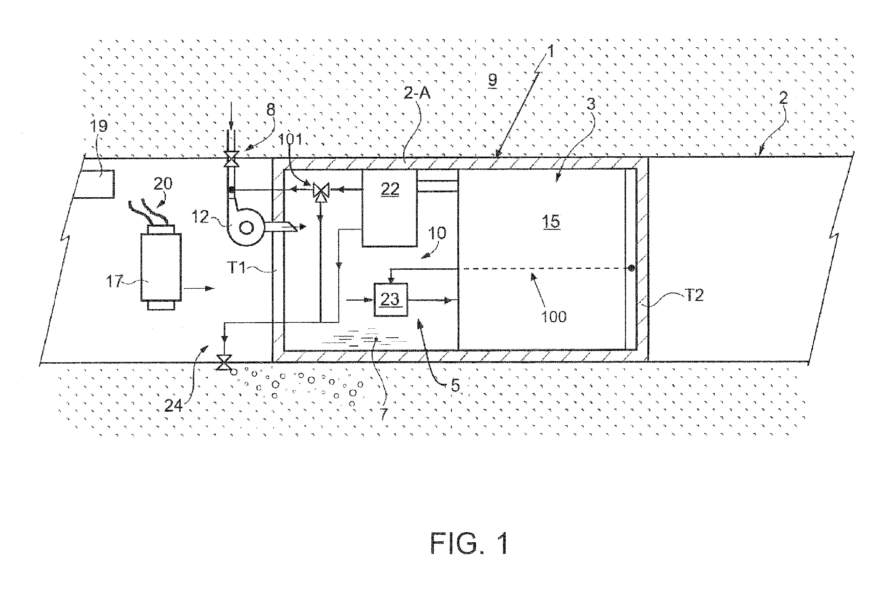

In Figure 1, reference numeral 1 indicates, as a whole, an electric battery for the propulsion of a craft in a marine environment, in particular a torpedo 2 (shown schematically). The battery 1 can, in any case, be advantageously used in a generic UAV (Underwater Autonomous Vehicle).

The electrochemical battery 1 comprises:

- a main electric battery 3 of the electrochemical type, in which a mixing chamber 5 (the chamber 5 can be delimited by a portion of the cylindrical, tubular walls 2-A of the torpedo 2 and by partition walls T1 and T2) is configured to house an anhydrous electrolyte 7 (for example, powdered NaOH) and is provided with an intake member 8 for admitting a flow of water from the aquatic environment 9 that surrounds the torpedo 2 when immerged in sea to the chamber 5, where the seawater mixes with the powdered electrolyte 7 and forms a liquid electrolyte (typically, the intake member 8 can be located on the body of the torpedo 2 externally to the chamber 5);
- a recirculation system 10 for the fluid electrolyte using a centrifugal electric pump 12 (in the example shown, the pump 12 is housed in the torpedo 2 outside the chamber 5, while in other applications it could be housed inside the chamber 5) and communicating with a plurality of electrochemical cells 15 housed within the chamber 5;
- an auxiliary electric battery 17 that can be activated by remote control 20 (the command coming from an electronic control unit 19 of the torpedo 2) for opening the intake member 8 and powering the centrifugal electric pump 12, which enables - with methods that will be explained hereinafter - seawater to be taken into the mixing chamber 5, in which pressure is created that contributes to the circulation of the fluid electrolyte to the electrochemical cells 15. The auxiliary electric battery 17 is usually located outside the chamber 5 in a specially provided section of the torpedo 2.

The electrochemical battery 1 is also provided with a recirculation system, shown schematically, in which a mode valve 101 receives the liquid coming from a phase separator 22 and, depending on the operating state of the system, can send it to a discharge device 24 or to the inlet of the pump 12 for recirculation. A thermostatic valve 23 then receives, as input, the pressurized fluid coming from the chamber 5 and the return line 100 of a heat exchanger, and is able to feed the electrochemical cells 15 with liquid electrolyte having a substantially constant temperature. The phase separator 22 (shown schematically) is designed to extract the gaseous component that forms in the liquid electrolyte during the electrochemical reaction inside the cells 15 and send it to the discharge device 24.

The structure of the electrochemical battery 1 is however of known type and will not be further described.

According to the present invention, the water intake member 8 (for example, an on-off valve positioned on the body of the torpedo) is configured to establish a direct connection, when open, between the exterior of the torpedo 2 and the inlet of the centrifugal electric pump 12), which has an outlet communicating directly with the mixing chamber; the centrifugal pump 12 is dimensionally configured to act as a flow limiting device when the pressure at the pump inlet is higher than the pressure at the pump outlet, thereby supplying the mixing chamber 5 with a substantially constant flow that complies with the design limits of the electrochemical battery 1.

In this way, an electrochemical battery 1 is produced in which the sole centrifugal pump 12 is capable of limiting the flow rate and can be used for this purpose without introducing flow-rate limiting devices of the type described according to the known art. In this way, the electrochemical battery intrinsically has a structure less subject to malfunction as, with respect to the known art, the flow-rate regulator, which is a critical component as shown above, has been eliminated. In addition, the design of the battery 1 is simplified and there is also a reduction in costs and weight.

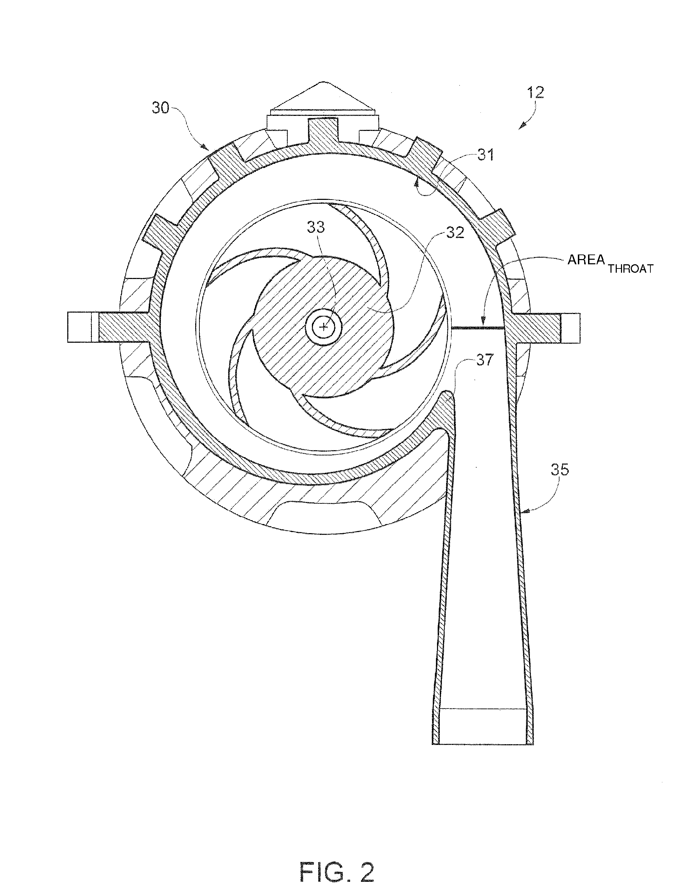

The electric pump 12 is of the axial suction and radial delivery type, and comprises (Figure 2) a casing 30 that internally delimits a toroidal cavity 31 (scroll or volute), which houses an impeller 32 angularly movable about an axis 33 under the propelling force of an electric motor (not shown) powered by the auxiliary electric battery 17 during the transitory phase of the main battery. A discharge conduit 35, which forms the pump delivery line, runs from the volute 31. At the connection zone with the volute (lip 37), the section of the exhaust conduit 35 has an area $AREA_{THROAT}$ that takes - according to the present invention - a predetermined value so that the effect of limiting the flow rate can take place as described in the foregoing.

In particular, $AREA_{THROAT}$, expressed in mm2, takes the following value (obtained experimentally):

$$AREA_{THROAT} = (Q_{MAX}/Q_R - q)/m \quad \text{(Formula 1)}$$

where:

m is a first parameter that is a function of the pressure difference $\Delta P$ between the pump inlet and the pump outlet under the severest operating conditions (torpedo launched at depth with large difference between the water pressure outside the torpedo and the pressure inside the mixing chamber 5);

q is a second parameter that is a function of the pressure difference $\Delta P$ between the pump inlet and the pump outlet under the aforesaid severest operating conditions;

$Q_{MAX}$ is the maximum allowable flow rate (or capacity) for the aforesaid operating conditions;

$Q_R$ is the nominal flow rate, also known as "nominal capacity", or rather the flow rate at the design duty point of the pump; the nominal capacity, or flow rate at the design duty point, is defined by the manufacturer of the pump itself based on constructive parameters of the pump. In other words, the parameter $Q_R$ is a parameter which is always provided by the manufacturer of the pump, and identified with the term "nominal capacity" (or "nominal flow rate") or "design capacity", and thus known.

In detail, m is expressed by the following relation (obtained experimentally):

$$m = -2.00E-06 * \Delta P^2 + 1.16E-04 * \Delta P + 9.00E-04$$

$$\text{(Formula 2)}$$

According to one advantageous embodiment, parameter q is expressed by the following relation (obtained experimentally):

$$q = 6.124\text{E}{-}04 * \Delta\text{P}^2 + 4.796\text{E}{-}03 * \Delta\text{P} + 1.433\text{E}{+}00$$

$$(\text{Formula 3})$$

In Formula 1 and Formula 2, $\Delta$P is expressed in bar.

In greater detail, it is noted that $Q_{MAX}$ is the maximum capacity allowable in input to the electrochemical battery 1 without generating damages to the battery 1 itself. Thus, the value $Q_{MAX}$ depends on the electrochemical battery 1 used, and may be obtained experimentally by increasing the capacity in input to the battery 1 and verifying its damaging point. The value $Q_{MAX}$ is therefore the value immediately preceding the damaging value of the electrochemical battery 1.

When the input valve of the electrochemical battery 1 is opened, the pressure inside the battery 1 has the same order of magnitude of the atmospheric pressure, while the external pressure may be very high due to the fact that it depends on the altitude at which the electrochemical battery is in that time instant (e.g., the battery 1 is located on a torpedo); in the absence of an element which regulates the capacity at input to the electrochemical battery 1, such a condition would generate a very high flow rate, even higher than the maximum acceptable value ($Q_{MAX}$). According to an aspect of the present disclosure, the element which regulates the input capacity is the recirculating pump of the electrolyte, which, in the presence of an upstream pressure higher than that downstream, shows a turbine-like behavior and, correctly dimensioned, limits the maximum input capacity to values lower than $Q_{MAX}$. After having made these preliminary remarks, the maximum value of $\Delta$P represents the difference between the pressure upstream of the pump, when the input valve of the battery is opened at the maximum deepness foreseen at the design stage and the pressure present downstream of the pump at the same instant. The pump may carry out a regulation of the capacity is adequately dimensioned; in particular, the present Applicant has verified that the vortex which takes place in the vicinity of the throat section self-limits the capacity as a function of the throat section area $AREA_{THROAT}$ if the throat area satisfies the aforementioned Formula 1. Formula 1, which links the throat area to the parameters $Q_{MAX}$, $Q_R$, $q$ ed $m$, has been obtained and verified by the present Applicant based on theory and experimental results. Also the relations (formulae 2 and 3) which express the parameters m and q have been obtained experimentally and based on practical experiments.

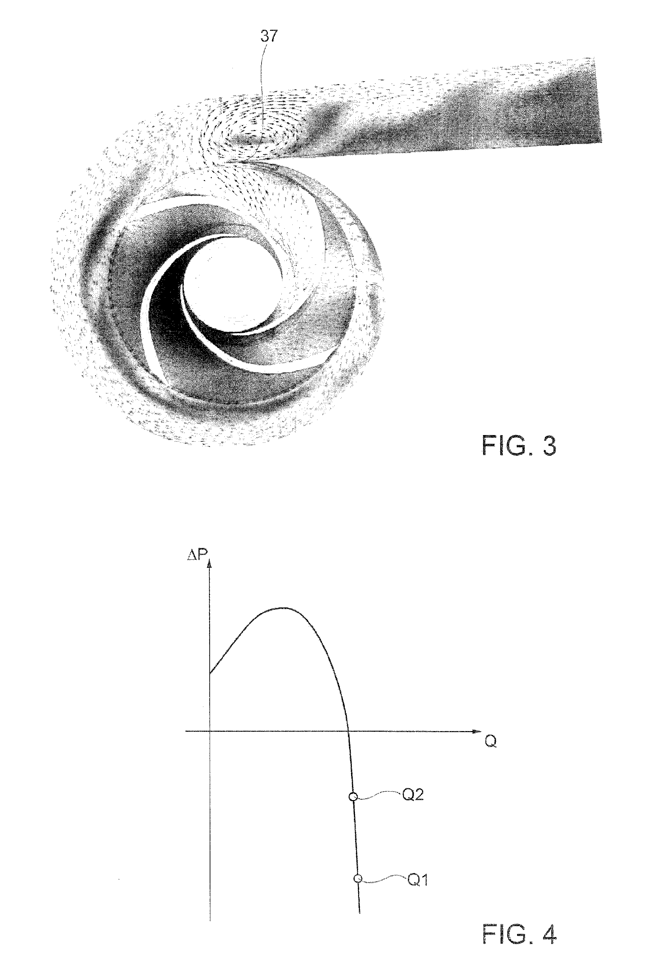

Figure 3 shows the course of the velocity vector in the flow-rate limiting condition resulting from the chosen area. In this figure, it can be seen that a vortex forms in the outgoing fluid at the connection point (lip) that reduces the fluid passage section, with a large increase in pressure drop. As the flow rate increases, the size of the vortex increases, reducing the passage section even further and increasing the pressure drop.

Figure 4 shows the course of the curve that expresses the flow rate Q (X -axis) as a function of the pressure difference $\Delta$P (Y -axis) between inlet and outlet of the pump 12 for a certain number of revolutions n of the pump. The curve has a similar shape as the number of revolutions changes.

By sizing the pump according to Formula 1, for the most severe operating conditions, the pump works in work zone Q1 where the curve shown has a steep slope, i.e. where change in the flow rate (X-axis) as a function of the change in pressure is negligible. In this way, the aforementioned flow-rate limiting is performed without using a flow-rate limiter.

If, following its launching, the torpedo moves to a shallower depth, the pressure difference between the inlet and outlet may drop and the duty point moves from Q1 to Q2, always in the steep-slope zone.

For example, assuming to have a nominal flow rate $Q_R$ of 5.5 1/s, if it wished to limit the maximum flow rate $Q_{MAX}$ to 20 l/s when launching the torpedo at a depth of 450 m, the throat area $AREA_{THROAT}$ must have a value of 368 mm$^2$; sized in this manner, the pump, for a given number of revs, will have decreasing incoming flow rates as the launch depth decreases, until a flow rate of approximately 7.5 l/s is reached at a depth of 10 m.

To conclude, it is noted that the electrochemical generator (battery) according to the present disclosure differs from the known generators for the absence of a regulation device of the input capacity to the electrochemical generator; as a fact, according to the present disclosure, the function of regulating the capacity is carried out by the pump for the recirculation of the electrolyte, which is present in the electrochemical generator itself. Such a solution guarantees a cost reduction, a weight reduction and an increase of reliability.

**Claims**

**1.**  An electrochemical battery for the propulsion of an underwater craft, in particular a torpedo, comprising:

- a main electric battery (3) of the electrochemical type, wherein a mixing chamber (5) is configured to house an anhydrous electrolyte (7) and is provided with an intake member (8) for admitting a flow of water from the aquatic environment to the chamber (5), where the admitted water is mixed with the anhydrous electrolyte (7), thereby forming a liquid electrolyte;

- a recirculation system (10) for the fluid electrolyte using a centrifugal electric pump (12) and communicating with a plurality of electrochemical cells (15) housed within the chamber (5);
- an auxiliary electric battery (17) that can be activated by remote control (20) for powering the centrifugal electric pump (12),

**characterized in that** the water intake member is configured to establish a direct connection, when open, between the exterior of the craft and the inlet of the centrifugal pump (12), which has an outlet communicating with the mixing chamber; said centrifugal pump is dimensionally configured to act as a flow limiting device when the pressure at the pump inlet is higher than the pressure at the pump outlet, thereby supplying the mixing chamber with a substantially constant flow that complies with the design limits of the electrochemical battery (1).

2. A battery according to claim 1, wherein said electric pump (12) is of the axial suction and radial delivery type, and comprises a casing (30) that internally delimits a toroidal volute (31), which houses an impeller (32) that is angularly movable about an axis (33) under the propelling force of an electric motor; a discharge conduit (35) runs from the volute (31), thereby forming the pump delivery line; at the connection zone with the volute, the exhaust conduit section has an area $\text{AREA}_{\text{THROAT}}$ that is sized according to the following expression:

$$\mathbf{AREA}_{\mathbf{THROAT}} \ = \ (\mathbf{Q}_{\mathbf{MAX}}/\mathbf{Q}_{\mathbf{R}} \ - \ \mathbf{q})/\mathbf{m}$$

where:

m is a first parameter that is a function of the pressure difference $\Delta P$ between the pump inlet and the pump outlet under the severest operating conditions;
q is a second parameter that is a function of the pressure difference $\Delta P$ between the pump inlet and the pump outlet under said severest operating conditions;
$Q_{\text{MAX}}$ is the maximum allowable incoming flow rate for the aforesaid operating conditions;
$Q_R$ is the flow rate under nominal conditions.

3. A battery according to claim 2, wherein parameter m is expressed by the following relation:

$$m \ = \ -2.00\text{E}-06 \ * \ \Delta P^2 \ + \ 1.16\text{E}-04 \ * \ \Delta P \ + \ 9.00\text{E}-04$$

4. A battery according to claim 2 or 3, wherein parameter q is expressed by the following relation:

$$q \ = \ 6.12\text{E}-04 \ * \ \Delta P^2 \ + \ 4.80\text{E}-03 \ * \ \Delta P \ + \ 1.43\text{E}+00$$

FIG. 1

FIG. 2

37

FIG. 3

FIG. 4

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/140227 A1 (DCNS [FR]; GERLIER FRANCOIS [FR]; SENEZ THOMAS [FR]; LEMASQUERIER ALEX) 18 October 2012 (2012-10-18) * abstract * * page 2, line 29 - page 4, line 2; figures 1-4 * & US 2014/113210 A1 (GERLIER FRANCOIS [FR] ET AL) 24 April 2014 (2014-04-24) * abstract * * paragraph [0025] - paragraph [0037]; figures 1-4 * | 1-4 | INV. H01M2/40 F42B12/00 F42B19/24 H01M6/34 B63H21/17 |
| A | FR 2 978 302 A1 (DCNS [FR]) 25 January 2013 (2013-01-25) * abstract * * page 2, line 1 - page 10, line 6; figures 1-3 * | 1-4 | |
| A | US 2007/105460 A1 (VIVIEN DIDIER [FR] ET AL) 10 May 2007 (2007-05-10) * paragraph [0038] - paragraph [0045] * * paragraph [0069] - paragraph [0080] * * figure 1a * | 1-4 | TECHNICAL FIELDS SEARCHED (IPC) H01M F42B B63H |
| A | EP 0 307 292 A1 (FRANCE ETAT [FR]) 15 March 1989 (1989-03-15) * abstract * * paragraph [0024] - paragraph [0030]; figure 1 * | 1-4 | |

The present search report has been drawn up for all claims

| Place of search | Date of completion of the search | Examiner |
|---|---|---|
| The Hague | 2 July 2015 | Pipoli, Tiziana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 15 8716

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2015

| Patent document cited in search report | | Publication date | Patent family member(s) | | Publication date |
|---|---|---|---|---|---|
| WO 2012140227 | A1 | 18-10-2012 | EP | 2697849 A1 | 19-02-2014 |
| | | | FR | 2974246 A1 | 19-10-2012 |
| | | | US | 2014113210 A1 | 24-04-2014 |
| | | | WO | 2012140227 A1 | 18-10-2012 |
| FR 2978302 | A1 | 25-01-2013 | EP | 2735045 A1 | 28-05-2014 |
| | | | FR | 2978302 A1 | 25-01-2013 |
| | | | KR | 20140043907 A | 11-04-2014 |
| | | | US | 2014193688 A1 | 10-07-2014 |
| | | | WO | 2013010980 A1 | 24-01-2013 |
| US 2007105460 | A1 | 10-05-2007 | DE | 602004006295 T2 | 03-07-2008 |
| | | | EP | 1685613 A1 | 02-08-2006 |
| | | | FR | 2862433 A1 | 20-05-2005 |
| | | | US | 2007105460 A1 | 10-05-2007 |
| | | | WO | 2005053068 A1 | 09-06-2005 |
| EP 0307292 | A1 | 15-03-1989 | DE | 3875042 D1 | 05-11-1992 |
| | | | DE | 3875042 T2 | 25-02-1993 |
| | | | EP | 0307292 A1 | 15-03-1989 |
| | | | FR | 2620273 A1 | 10-03-1989 |

EPO FORM P0459